# EUROPÄISCHE PATENTSCHRIFT

(11) **EP 2 281 335 B1**
(45) Veröffentlichungstag und Bekanntmachung des Hinweises auf die Patenterteilung: **25.01.2012**
(21) Anmeldenummer: 09735001.1
(22) Anmeldetag: 23.04.2009
(51) Int. Cl.: H02P 9/00, F03D 9/00, H02K 21/24

(54) **GENERATOREINRICHTUNG MIT ÜBERWACHUNG VON STROMPFADEN**
GENERATOR DEVICE WITH MONITORING OF CURRENT PATHS
DISPOSITIF DE GÉNÉRATEUR À CONTRÔLE DES VOIES DE COURANT

(30) Priorität: 25.04.2008 DE 102008020731
(43) Veröffentlichungstag der Anmeldung: 09.02.2011
(73) Patentinhaber: Caliebe, Reinhard, 95182 Döhlau Ot Tauperlitz (DE); CLANA Power Systems GmbH, 95182 Döhlau (DE)
(72) Erfinder: Caliebe, Reinhard, 95182 Döhlau Ot Tauperlitz (DE)
(74) Vertreter: Eichstädt, Alfred
(86) Internationale Anmeldenummer: PCT/EP2009/054883
(87) Internationale Veröffentlichungsnummer: WO 2009/130273

(56) Entgegenhaltungen:
- WO-A-2004/017497
- JP-A- 3 261 399
- JP-A- 2000 184 793
- JP-A- 2006 271 186
- US-A1- 2007 187 955

## Beschreibung

Die vorliegende Erfindung betrifft eine Generatoreinrichtung zum Erzeugen von elektrischer Energie,
- wobei die Generatoreinrichtung einen Rotor aufweist, der um eine Rotationsachse drehbar ist,
- wobei die Generatoreinrichtung eine Mehrzahl von elektrischen Strompfaden aufweist, in denen durch Drehen des Rotors jeweils eine elektrische Spannung und ein korrespondierender Strom generiert werden,
- wobei die generierten elektrischen Spannungen abgegriffen und direkt oder indirekt als Nutzspannungen nach außen abgegeben werden,
- wobei den elektrischen Strompfaden eine gemeinsame Überwachungseinrichtung zugeordnet ist, der die Spannungswerte zugeführt werden,
- wobei die Überwachungseinrichtung die ihr zugeführten Spannungswerte auf Einhalten von Grenzwerten überwacht und im Falle des Nichteinhaltens der Grenzwerte eine Schutzreaktion, insbesondere ein Stillsetzen des Rotors, auslöst.

Derartige Generatoreinrichtungen sind allgemein bekannt.

Wenn in einem der elektrischen Strompfade eine Fehlfunktion auftritt, kann es geschehen, dass die Generatoreinrichtung keinerlei elektrische Energie mehr nach außen abgibt, also weder über den elektrischen Strompfad, in dem die Fehlfunktion aufgetreten ist, noch über einen der anderen elektrischen Strompfade. Aus diesem Grund sind die Überwachungseinrichtungen vorhanden. Denn wenn keine Gegenmaßnahmen ergriffen werden, würde der Rotor im Falle einer Fehlfunktion in einem der elektrischen Strompfade "durchgehen", da der Rotation des Rotors in diesem Fall kein nennenswerter Widerstand mehr entgegen gesetzt wird. Das "Durchgehen" des Rotors könnte daher zu einer Überdrehzahl führen, die Schäden an der Generatoreinrichtung und/oder an der den Rotor antreibenden Einrichtung zur Folge haben kann.

Zum Versorgen der Überwachungseinrichtungen mit elektrischer Energie muss im Stand der Technik eine weitere Energiequelle bereit gestellt werden, beispielsweise eine Batterie oder ein Akkumulator. Die weitere Energiequelle muss weiterhin gewartet und von Zeit zu Zeit überprüft und eventuell ausgetauscht werden. All dies ist mit Aufwand und Kosten verbunden.

Aus dem Katalog "Überwachungsrelais K8-Serie" der Firma OM-RON, Katalog Nr. SF6P_K8_Series_DE01_0 05, ist bekannt, ein Relais bei einer Windkraftanlage zur Überwachung aller drei Phasen auf Überspannung und Unterspannung einzusetzen. Im Falle einer Überspannung bzw. einer Unterspannung wird eine Leuchtdiode angesteuert und ein Relaiskontakt betätigt. Die Versorgungsspannung ist mit der Nenneingangsspannung des Relais identisch. Die Nenneingangsspannung ist über Schalter einstellbar.

Aus der DE 357 997 ist bekannt, die Klemmenspannung des Generators einer Windkraftanlage abzugreifen und gegebenenfalls eine Bremseinrichtung auszulösen.

Aus der US 2007/187955 A1 ist eine Generatoreinrichtung zum Erzeugen von elektrischer Energie bekannt, die einen Rotor aufweist, der um eine Rotationsachse drehbar ist. Die Generatoreinrichtung weist eine Mehrzahl von elektrischen Strompfaden auf, in denen durch Drehen des Rotors jeweils eine elektrische Spannung und ein korrespondierender Strom generiert werden. Die elektrischen Spannungen werden abgegriffen und indirekt - nämlich über einen Umrichter - als Nutzspannungen nach außen abgegeben. Die Generatoreinrichtung weist eine Überwachungseinrichtung auf, die eine Schutzreaktion auslösen kann.

Die Aufgabe der vorliegenden Erfindung besteht darin, eine Generatoreinrichtung der eingangs genannten Art derart weiter zu entwickeln, dass auf einfache Weise die Funktion der Überwachungseinrichtung mit elektrischer Energie gewährleistet werden kann, obwohl keine zusätzliche Energieversorgungseinrichtung vorhanden ist.

Die Aufgabe wird durch eine Generatoreinrichtung mit den Merkmalen des Anspruchs 1 gelöst. Vorteilhafte Ausgestaltungen sind Gegenstand der abhängigen Ansprüche 2 bis 14. Der abhängige Anspruch 15 nennt einen bevorzugten Anwendungsfall.

Erfindungsgemäß ist bei einer Generatoreinrichtung der obenstehend beschriebenen Art vorgesehen,
- dass der Überwachungseinrichtung alternativ oder zusätzlich zu den generierten Spannungswerten die generierten Stromwerte zugeführt werden,
- dass die Überwachungseinrichtung die ihr zugeführten Spannungswerte und/oder die ihr zugeführten Stromwerte auf Einhalten vorbestimmter Beziehungen relativ zueinander überwacht und im Falle des Nichteinhaltens eine Schutzreaktion, insbesondere ein Stillsetzen des Rotors, auslöst,
- dass die elektrischen Strompfade derart ausgebildet sind, dass bei einer Fehlfunktion eines beliebigen der elektrischen Strompfade in mindestens einem der verbleibenden elektrischen Strompfade weiterhin eine elektrische Spannung generiert wird, und
- dass die Überwachungseinrichtung über mindestens zwei der elektrischen Strompfade mit elektrischer Energie versorgt wird.

Diese Maßnahmen haben zunächst die Wirkung, dass die für den Betrieb der Überwachungseinrichtungen erforderliche Energie trotz des Auftretens einer Fehlfunktion weiterhin von der Generatoreinrichtung selbst zur Verfügung gestellt werden kann. In Einzelfällen kann es sogar möglich sein, einen weiteren Betrieb der Generatoreinrichtung zuzulassen, beispielsweise mit reduzierter Einspeisung von elektrischer Energie in ein externes Stromnetz.

Es ist möglich, dass die Strompfade eine einzige Schicht bilden. In diesem Fall kann die Schicht alternativ in einer zur Rotationsachse orthogonalen Ebene verlaufen oder tangential um die Rotationsachse umlaufen.

Alternativ können die Strompfade mehrere Schichten bilden. Analog zu den Fall, dass nur eine einzige Schicht vorhanden ist, ist auch hier alternativ ein Verlauf in zur Rotationsachse orthogonalen Ebenen oder tangential um die Rotationsachse herum möglich. Im erstgenannten Fall sind die Schichten in Richtung der Rotationsachse gesehen gegeneinander versetzt angeordnet, im letztgenannten Fall radial zur Rotationsachse gesehen voneinander beabstandet angeordnet.

Wenn eine Fehlfunktion auftritt, tritt die Fehlfunktion mit relativ hoher Wahrscheinlichkeit in einer der beiden Schichten auf, die am weitesten voneinander entfernt angeordnet sind. In dem Fall, dass eine Demontage der Schichten möglich ist, ist es daher von Vorteil, wenn mindestens eine dieser beiden Schichten ohne Demontage anderer Schichten von den anderen Schichten entfernbar ist. Ebenso stellt es einen Vorteil dar, wenn eine dieser beiden Schichten ohne Demontage der betreffenden Schicht als Einheit von den anderen Schichten entfernbar ist.

Die Anordnung und Ausgestaltung der Strompfade kann beliebig sein, solange die prinzipielle Bedingung gewährleistet bleibt, dass bei einer Fehlfunktion eines beliebigen der elektrischen Strompfade in mindestens einem der verbleibenden elektrischen Strompfade weiterhin eine elektrische Spannung generiert wird. Im einfachsten Fall können daher elektrische Generatoreinrichtungen verwendet werden, die zwei (oder mehr) parallel geführte, jedoch unabhängig voneinander abgegriffene Strompfade aufweisen. Im Regelfall jedoch sind die Strompfade derart miteinander verschaltet, dass sie im Normalbetrieb Drehstrom erzeugen. Beispielsweise können die Strompfade zu diesem Zweck in Sternschaltung miteinander verschaltet sein. Auch eine Dreieckschaltung ist jedoch realisierbar.

Um die Betriebssicherheit der Generatoreinrichtung zu gewährleisten, ist vorzugsweise weiterhin vorgesehen, dass die Überwachungseinrichtung sich selbst auf ordnungsgemäßes Funktionieren überwacht und im Falle einer Fehlfunktion der Überwachungseinrichtung das Abgeben einer Alarmmeldung und/oder ein Stillsetzen des Rotors auslösen.

Die Überwachungseinrichtung kann zum Stillsetzen des Rotors insbesondere das Betätigen einer elektrischen Bremse bewirken. Die elektrische Bremse kann beispielsweise als Wirbelstrombremse ausgebildet sein.

Der häufigste Anwendungsfall der erfindungsgemäßen Generatoreinrichtung ist bei einer Windkraftanlage. Eine derartige Windkraftanlage weist ein Windrad und eine erfindungsgemäße Generatoreinrichtung auf, wobei das Windrad mit dem Rotor der Generatoreinrichtung verbunden ist, so dass der Rotor mittels des Windrads antreibbar ist. Als Windrad kann hierbei ein beliebiges Element verwendet werden, das vom Wind in Rotation versetzt wird.

Weitere Vorteile und Einzelheiten ergeben sich aus der nachfolgenden Beschreibung von Ausführungsbeispielen in Verbindung mit den Zeichnungen. Es zeigen in Prinzipdarstellung
- Figur 1: schematisch eine Windkraftanlage,
- Figur 2: schematisch eine Anordnung von Strompfaden einer Generatoreinrichtung,
- Figur 3: eine Überwachungsschaltung,
- Figuren 4 bis 11: mögliche Anordnungen von Schichten und
- Figuren 12 und 13: zu Figur 3 alternative Gestaltungen.'

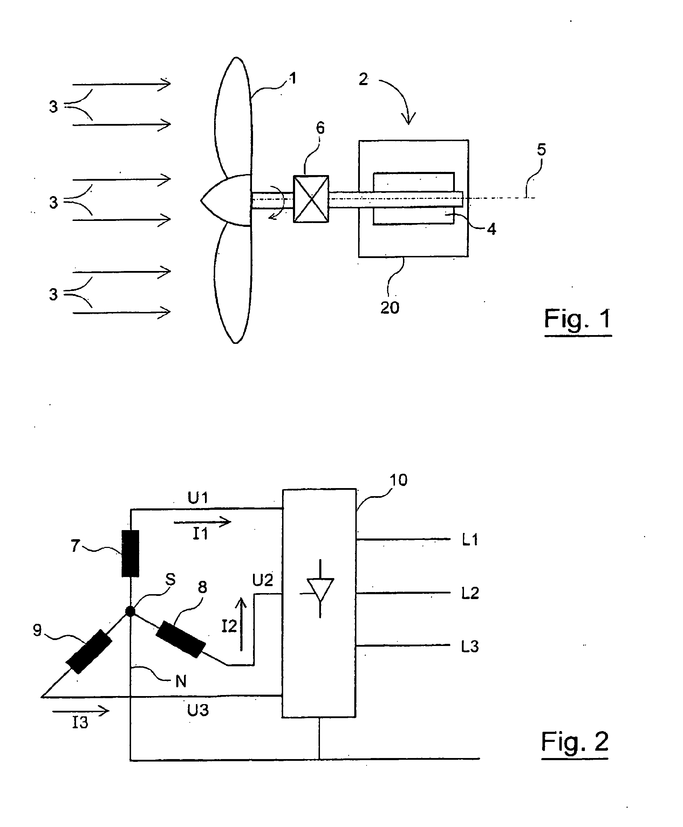

Gemäß Figur 1 weist eine Windkraftanlage ein Windrad 1 und eine Generatoreinrichtung 2 auf. Das Windrad 1 ist gemäß Figur 1 als Propeller 1 ausgebildet, dessen Rotationsachse parallel zum Wind 3 ausgerichtet ist. Alternativ könnte das Windrad 1 beispielsweise als - gegebenenfalls modifizierter - Darrieus-Rotor ausgebildet sein, dessen Rotationsachse orthogonal zum Wind 3 gerichtet ist, siehe beispielsweise das DE 20 2007 009 555 U1.

Die Generatoreinrichtung 2 weist einen Rotor 4 auf, der um eine Rotationsachse 5 drehbar ist. Der Rotor 4 ist mit dem Windrad 1 verbunden, beispielsweise direkt oder, wie in Figur 1 dargestellt, über ein Getriebe 6. Auf Grund der Verbindung des Rotors 4 mit dem Windräd 1 ist das Windrad 1 in der Lage, den Rotor 4 anzutreiben, so dass ein Rotieren des Windrads 1 mit einem Rotieren des Rotors 4 korrespondiert.

Gemäß den Figuren 1 und 2 weist die Generatoreinrichtung 2 eine Mehrzahl von elektrischen Strompfaden 7 bis 9 auf, in denen durch Drehen des Rotors 4 jeweils eine elektrische Spannung U1 bis U3 generiert wird. Gemäß Figur 2 sind die Strompfade 7 bis 9 derart miteinander verschaltet, dass sie im Normalbetrieb Drehstrom erzeugen. Insbesondere sind die Strompfade 7 bis 9 gemäß Figur 2 über einen Sternpunkt S in Sternschaltung miteinander verschaltet, wobei an den Sternpunkt S ein Nullleiter N angeschlossen ist. Es sind jedoch auch andere Verschaltungen möglich. Beispielsweise können die Strompfade 7 bis 9 in Dreieckschaltung miteinander verschaltet sein. Auch eine Anordnung der Strompfade 7 bis 9 unabhängig voneinander ist möglich. Entscheidend ist, dass die elektrischen Strompfade 7 bis 9 derart ausgebildet sind, dass bei einer Fehlfunktion eines beliebigen der elektrischen Strompfade 7 bis 9 in mindestens einem der verbleibenden elektrischen Strompfade 7 bis 9 weiterhin eine elektrische Spannung U1 bis U3 generiert wird. Wenn also beispielsweise im Strompfad 7 eine Fehlfunktion auftritt, muss in mindestens einem der Strompfade 8 und 9 weiterhin eine elektrische Spannung U2, U3 generiert werden. In analoger Weise muss, wenn eine Fehlfunktion des Strompfades 8 bzw. des Strompfades 9 auftritt, in mindestens einem der Strompfade 7 und 9 bzw. 7 und 8 weiterhin eine elektrische Spannung U1, U3 bzw. U1, U2 generiert werden.

Die generierten elektrischen Spannungen U1 bis U3 werden gemäß Figur 2 abgegriffen und als Nutzspannungen L1 bis L3 nach außen abgegeben. In Einzelfällen kann es möglich sein, dass die abgegriffenen elektrischen Spannungen U1 bis U3 direkt nach außen abgegeben werden. In der Regel erfolgt jedoch eine indirekte Abgabe, beispielsweise auf Grund einer Zwischenordnung einer Umrichtereinrichtung 10.

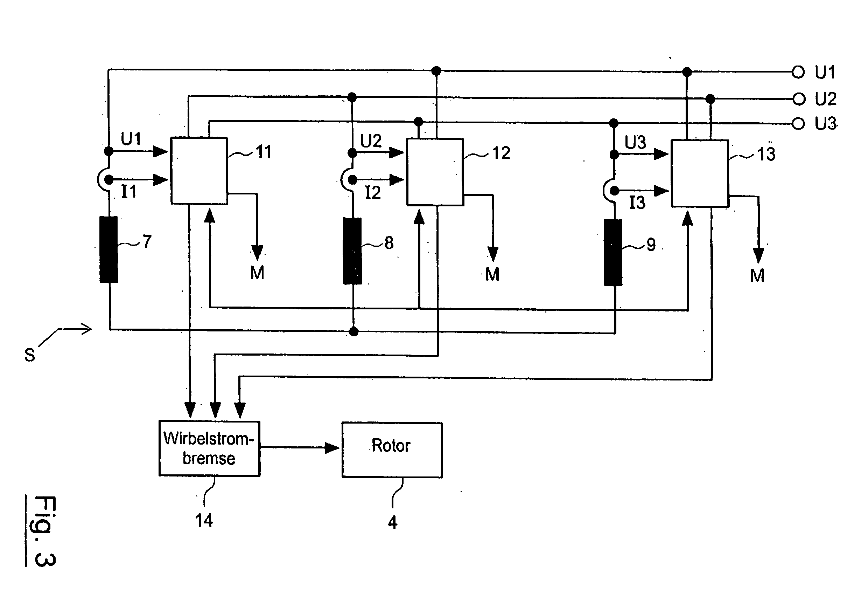

Gemäß Figur 3 ist jedem der elektrischen Strompfade 7 bis 9 jeweils eine Überwachungseinrichtung 11 bis 13 zugeordnet. Jede Überwachungseinrichtung 11 bis 13 wird hierbei über mindestens einen der elektrischen Strompfade 7 bis 9 mit elektrischer Energie versorgt, in denen bei einer Fehlfunktion der jeweiligen Überwachungseinrichtung 11 bis 13 zugeordneten elektrischen Strompfade 7 bis 9 weiterhin eine elektrische Spannung U1 bis U3 generiert wird. Beispielsweise wird der Überwachungseinrichtung 11 als Versorgungsspannung mindestens eine der abgegriffenen Spannungen U2, U3 zugeführt, der Überwachungseinrichtung 12 mindestens eine der abgegriffenen Spannungen U1, U3 und der Überwachungseinrichtung 13 mindestens eine der abgegriffenen Spannungen U1, U2.

Jede Überwachungseinrichtung 11 bis 13 überwacht den ihr zugeordneten elektrischen Strompfad 7 bis 9 auf Fehlfunktion, insbesondere auf Unterbrechung und Kurzschluss. Beispielsweise können den Überwachungseinrichtungen 11 bis 13 die Spannung U1 bis U3 des jeweils überwachten Strompfades 7 bis 9 und der korrespondierende Strom I1 bis I3 des jeweils überwachten Strompfades 7 bis 9 zugeführt werden. Jede Überwachungseinrichtung 11 bis 13 überwacht die ihr zugeführte Spannung U1 bis U3 und/oder den ihr zugeführten Strom I1 bis I3 auf Einhalten vorbestimmter Grenzwerte und/oder vorbestimmter Relativbeziehungen (beispielsweise Amplitudenverhältnisse und Phasenbeziehungen). Wenn eine Fehlfunktion erkannt wird, löst die erkennende Überwachungseinrichtung 11 bis 13 ein Stillsetzen des Rotors 4 aus. Beispielsweise kann eine Bremseinrichtung 14 angesteuert werden. Die Bremseinrichtung 14 kann hierbei als elektrische Bremse 14 ausgebildet sein, beispielsweise als Wirbelstrombremse 14.

Gegebenenfalls kann auch eine weniger drastische Schutzreaktion ergriffen werden. Insbesondere kann bei einer Fehlfunktion in einem einzigen der Strompfade 7 bis 9 ein Betrieb mit reduzierter Generatorleistung zugelassen werden. Dies setzt jedoch voraus, dass ein Stillsetzen des Rotors 4 erzwungen werden kann
- im Falle einer Fehlfunktion in einem weiteren der Strompfade 7 bis 9 und
- im Falle des Überschreitens der reduzierten Generatorleistung.

Die Überwachungseinrichtungen 1 bis 13 kommunizieren weiterhin miteinander und überwachen sich gegenseitig auf ordnungsgemäßes Funktionieren. Im Falle einer Fehlfunktion der jeweils überwachten Überwachungseinrichtung 11 bis 13 kann die überwachende Überwachungseinrichtung 11 bis 13 ebenfalls ein Stillsetzen des Rotors 4 auslösen. Alternativ oder zusätzlich ist es möglich, dass die überwachende Überwachungseinrichtung 11 bis 13 eine Meldung M abgibt. Beispielsweise kann eine Mitteilung an eine übergeordnete Steuereinrichtung übermittelt werden, ein optisches oder akustisches Signal ausgegeben werden oder per Funk eine Leitstelle informiert werden. Es ist sogar möglich, ein entsprechendes Signal auf eine der Nutzspannungen L1 bis L3 aufzumodulieren.

Der Aufbau und die Wirkungsweise der Überwachungseinrichtungen 11 bis 13 sind Fachleuten bekannt. Weitergehende Ausführungen zu den Überwachungseinrichtungen 11 bis 13 sind daher nicht erforderlich.

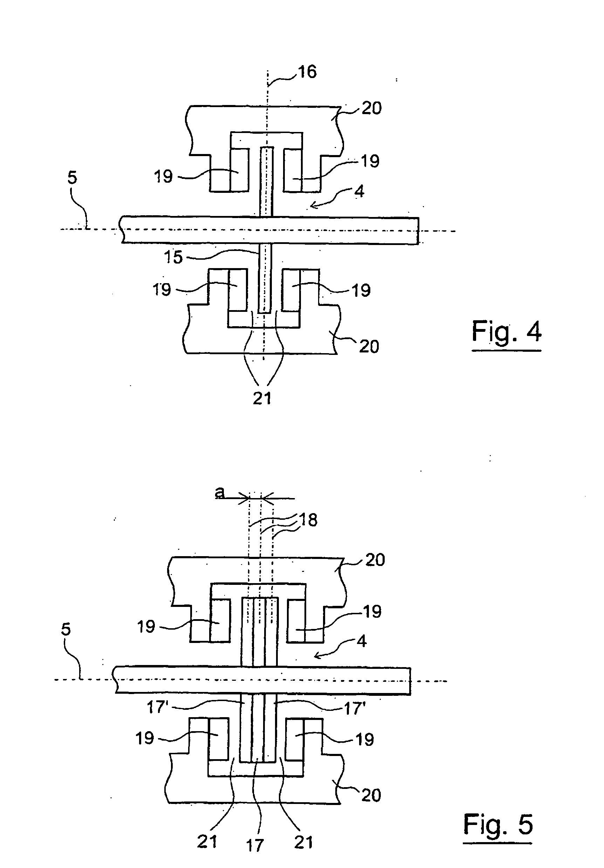

Die Generatoreinrichtung 2 kann als Scheibenläufergenerator ausgebildet sein. In diesem Fall können die Strompfade 7 bis 9 eine einzige Schicht 15 bilden, die gemäß Figur 4 in einer zur Rotationsachse 5 orthogonalen Ebene 16 verläuft. Alternativ können im Falle des Scheibenläufergenerators gemäß Figur 5 die Strompfade 7 bis 9 mehrere Schichten 17, 17' bilden. In diesem Fall verläuft jede der Schichten 17, 17' jeweils in einer zur Rotationsachse 5 orthogonalen Ebene 18. Die Schichten 17, 17' sind in diesem Fall in Richtung der Rotationsachse 5 gesehen gegeneinander versetzt angeordnet, weisen also einen Axialabstand a voneinander auf.

Axial beidseits der Schicht 15 bzw. der Schichten 17, 17' sind gemäß den Figuren 4 und 5 Permanentmagnete 19 angeordnet. Die Permanentmagnete 19 sind in einem Generatorgehäuse 20 befestigt. Ein Luftspalt 21 zwischen den Permanentmagneten 19 und der Schicht 15 bzw. den Schichten 17, 17' liegt meist im Bereich unter 1 mm.

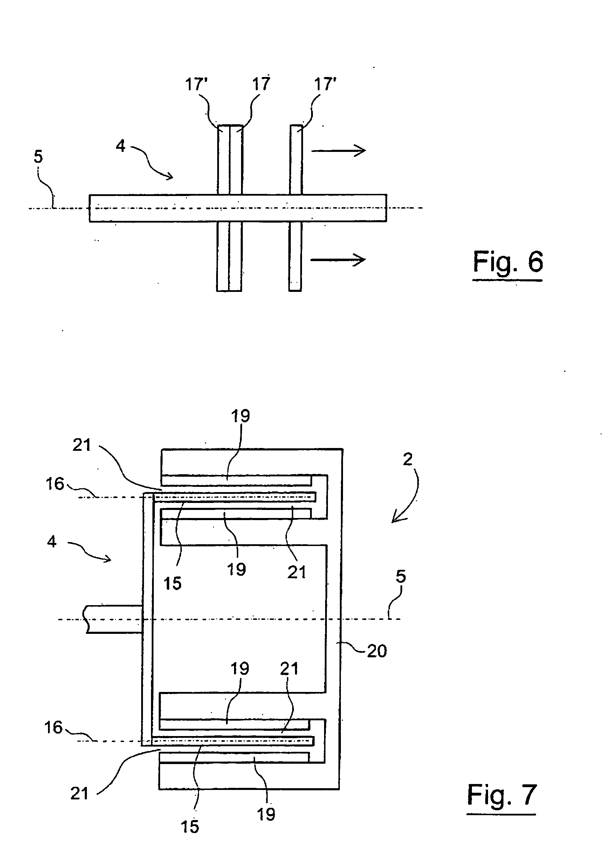

Die Wahrscheinlichkeit, dass eine Fehlfunktion eines der Strompfade 7 bis 9 auftritt, ist sehr gering, jedoch nicht Null. Wenn eine Fehlfunktion auftritt, tritt die Fehlfunktion bei der Ausgestaltung von Figur 5 jedoch mit hoher Wahrscheinlichkeit in einer der beiden äußeren Schichten 17' auf. In einer bevorzugten Ausgestaltung des Scheibenläufergenerators ist daher gemäß Figur 6 vorgesehen, dass mindestens eine der beiden Schichten 17', die am weitesten voneinander entfernt angeordnet sind, ohne Demontage anderer Schichten 17, 17' von den anderen Schichten 17, 17' entfernbar ist. Vorzugsweise besteht hierbei die Möglichkeit, die betreffende Schicht 17' als Einheit von den anderen Schichten 17, 17' zu entfernen.

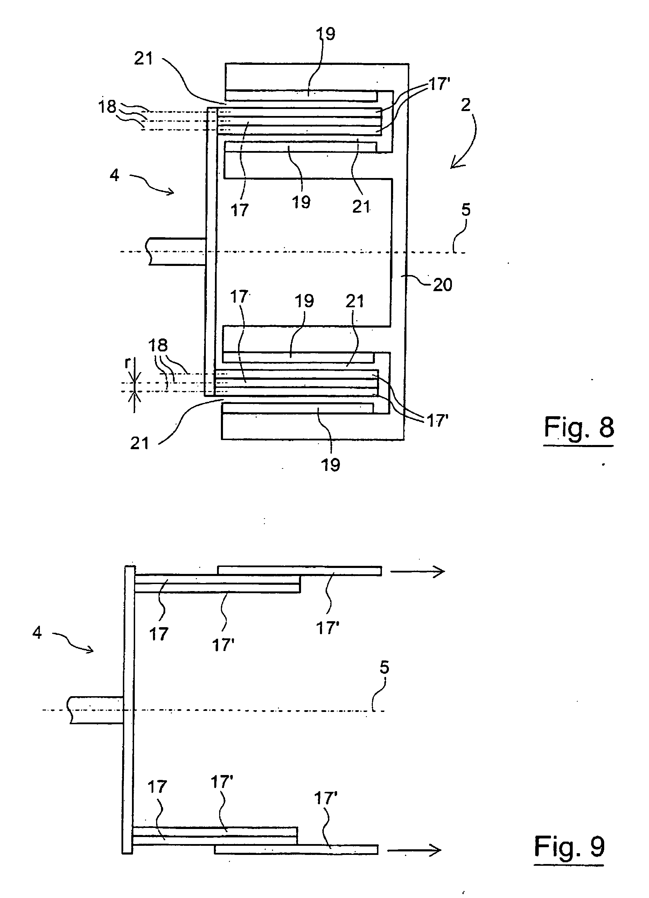

Alternativ zur Ausgestaltung der Generatoreinrichtung 2 als Scheibenläufergenerator kann die Generatoreinrichtung 2 als Glockenläufergenerator ausgebildet sein. Auch in diesem Fall können die Strompfade 7 bis 9 alternativ eine einzige Schicht 15 bilden (siehe Figur 7) oder mehrere Schichten 17, 17' bilden (siehe Figur 8). Bei der Ausbildung als Glockenläufergenerator verläuft im Falle einer einzigen Schicht 15 die Schicht 15 tangential um die Rotationsachse 5 um. Bei mehreren Schichten 17, 17' laufen die Schichten 17, 17' ebenfalls tangential um die Rotationsachse 5 um. Sie sind in diesem Fall radial zur Rotationsachse 5 gesehen voneinander beabstandet, weisen also einen Radialabstand r voneinander auf.

Auch bei der Ausgestaltung als Glockenläufergenerator mit mehreren Schichten 17, 17' ist gemäß Figur 9 bevorzugt, dass mindestens eine der beiden Schichten 17, 17', die am weitesten voneinander entfernt angeordnet sind, also die radial innerste und/oder die radial äußerste Schicht 17', ohne Demontage der betreffenden Schicht 17' als Einheit von den anderen Schichten 17, 17' entfernbar ist.

In manchen Fällen wird es bei der Ausgestaltung der Generatoreinrichtung 2 als Glockenläufergenerator nur möglich sein, die radial äußerste Schicht 17' ohne Demontage anderer Schichten 17, 17' von den anderen Schichten 17, 17' zu entfernen. In anderen Fällen kann es jedoch möglich sein, die Generatoreinrichtung 2 derart auszugestalten, dass sowohl die radial äußerste als auch die radial innerste Schicht 17' ohne Demontage anderer Schichten 17, 17' von den anderen Schichten 17, 17' entfernbar ist.

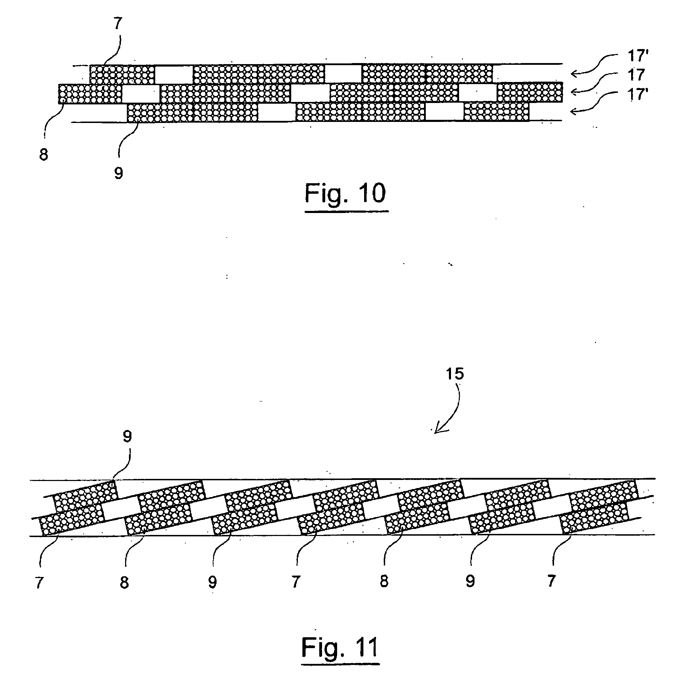

Bei den obenstehend in Verbindung mit den Figuren 4 bis 9 beschriebenen Ausgestaltungen sind die Strompfade 7 bis 9 in den Schichten 15, 17, 17' stets parallel zu zwei der drei zueinander orthogonalen Hauptrichtungen (axial - radial - tangential) eines durch die Rotationsachse 5 des Rotors 4 definierten zylindrischen Koordinatensystems gerichtet, siehe schematisch Figur 10. Dies ist jedoch nicht zwingend erforderlich. Vielmehr könnten die Strompfade 7 bis 9 in der Schicht 15 bzw. in den Schichten 17, 17' auch geneigt angeordnet sein. Dies ist schematisch in Figur 11 für den Fall eines Scheiben- bzw. Glockenläufergenerators 2 mit einer einzigen Schicht 15 dargestellt. Analoge Ausgestaltungen sind auch bei Vorhandensein mehrerer Schichten 17, 17' möglich.

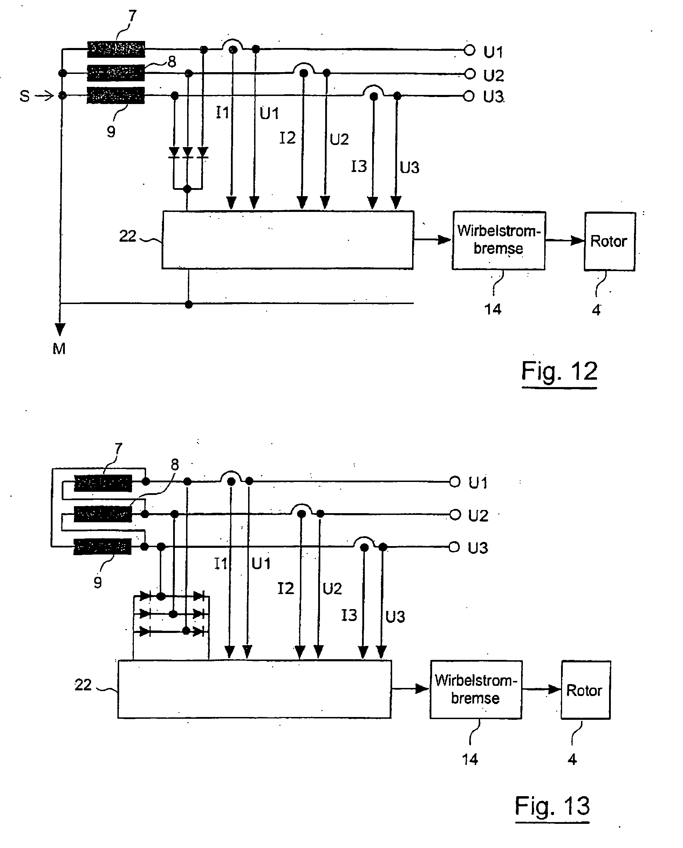

In Figur 3 sind die Überwachungseinrichtungen 11 bis 13 als voneinander getrennte Überwachungseinrichtungen ausgebildet. Alternativ könnte, wie in den Figuren 12 und 13 dargestellt, eine gemeinsame Überwachungseinrichtung 22 vorhanden sein, die beispielsweise über eine Gleichrichtereinrichtung von mindestens zwei der Strompfade 7 bis 9 mit elektrischer Energie versorgt wird. Figur 12 zeigt hierbei eine mögliche Ausgestaltung im Falle einer Sternschaltung der Strompfade 7 bis 9, Figur 13 eine mögliche Ausgestaltung im Falle einer Dreiecksschaltung der Strompfade 7 bis 9.

Die gemeinsame Überwachungseinrichtung 22 weist gegenüber den voneinander getrennten Überwachungseinrichtungen 11 bis 13 den zusätzlichen Vorteil auf, dass auch die Strom- und Spannungswerte I1 bis I3, U1 bis U3 pfadübergreifend miteinander verglichen werden können. Intern muss die gemeinsame Überwachungseinrichtung 22 hierbei fehlersicher ausgebildet sein, beispielsweise intern zweikanalig aufgebaut sein.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

- 1: Windrad
- 2: Generatoreinrichtung
- 3: Wind
- 4: Rotor
- 5: Rotationsachse
- 6: Getriebe
- 7 bis 9: Strompfade
- 10: Umrichtereinrichtung
- 11 bis 13, 22: Überwachungseinrichtungen
- 14: Bremseinrichtung
- 15, 17, 17': Schichten
- 16, 18: Ebenen
- 19: Permanentmagnete
- 20: Generatorgehäuse
- 21: Luftspalt
- a: Axialabstand
- I1 bis I3: Ströme
- L1 bis L3: Nutzspannungen
- M: Meldung
- N: Nullleiter
- r: Radialabstand
- S: Sternpunkt
- U1 bis U3: Spannungen

## Patentansprüche

1. Generatoreinrichtung zum Erzeugen von elektrischer Energie,
- wobei die Generatoreinrichtung einen Rotor (4) aufweist, der um eine Rotationsachse (5) drehbar ist,
- wobei die Generatoreinrichtung eine Mehrzahl von elektrischen Strompfaden (7 bis 9) aufweist, in denen durch Drehen des Rotors (4) jeweils eine elektrische Spannung (U1 bis U3) und ein korrespondierender Strom (I1 bis I3) generiert werden,
- wobei die generierten elektrischen Spannungen (U1 bis U3) abgegriffen und direkt oder indirekt als Nutzspannungen (L1 bis L3) nach außen abgegeben werden,
- wobei den elektrischen Strompfaden (7 bis 9) eine gemeinsame Überwachungseinrichtung (22) zugeordnet ist, der die generierten Spannungswerte (U1 bis U3) und/oder die generierten Stromwerte (I1 bis I3) (7 bis 9) zugeführt werden,
- wobei die Überwachungseinrichtung (22) die ihr zugeführten Spannungswerte (U1 bis U3) und/oder die ihr zugeführten Stromwerte (I1 bis I3) auf Einhalten vorbestimmter Beziehungen relativ zueinander überwacht und im Falle des Nichteinhaltens eine Schutzreaktion, insbesondere ein Stillsetzen des Rotors (4), auslöst,
- wobei die elektrischen Strompfade (7 bis 9) derart ausgebildet sind, dass bei einer Fehlfunktion eines beliebigen der elektrischen Strompfade (7 bis 9) in mindestens einem der verbleibenden elektrischen Strompfade (7 bis 9) weiterhin eine elektrische Spannung (U1 bis U3) generiert wird, und
- wobei die Überwachungseinrichtung (22) über mindestens zwei der elektrischen Strompfade (7 bis 9) mit elektrischer Energie versorgt wird.

2. Generatoreinrichtung nach Anspruch 1,
**dadurch gekennzeichnet,**
**dass** die Strompfade (7 bis 9) eine einzige Schicht (15) bilden.

3. Generatoreinrichtung nach Anspruch 2,
**dadurch gekennzeichnet,**
**dass** die Schicht (15) in einer zur Rotationsachse (5) orthogonalen Ebene (16) verläuft.

4. Generatoreinrichtung nach Anspruch 2,
**dadurch gekennzeichnet,**
**dass** die Schicht (15) tangential um die Rotationsachse (5) umläuft.

5. Generatoreinrichtung nach Anspruch 1,
**dadurch gekennzeichnet,**
**dass** die Strompfade (7 bis 9) mehrere Schichten (17, 17') bilden.

6. Generatoreinrichtung nach Anspruch 5,
**dadurch gekennzeichnet,**
**dass** jede der Schichten (17, 17') in einer zur Rotationsachse (5) orthogonalen Ebene (18) verläuft und dass die Schichten (17, 17') in Richtung der Rotationsachse (5) gesehen gegeneinander versetzt angeordnet sind.

7. Generatoreinrichtung nach Anspruch 5,
**dadurch gekennzeichnet,**
**dass** die Schichten (17, 17') tangential um die Rotationsachse (5) umlaufen und dass die Schichten (17, 17') radial zur Rotationsachse (5) gesehen voneinander beabstandet angeordnet sind.

8. Generatoreinrichtung nach Anspruch 5, 6 oder 7,
**dadurch gekennzeichnet,**
**dass** mindestens eine der beiden Schichten (17'), die am weitesten voneinander entfernt angeordnet sind, ohne Demontage anderer Schichten (17, 17') von den anderen Schichten (17, 17') entfernbar ist.

9. Generatoreinrichtung nach einem der Ansprüche 5 bis 8,
**dadurch gekennzeichnet,**
**dass** mindestens eine der beiden Schichten (17'), die am weitesten voneinander entfernt angeordnet sind, ohne Demontage der betreffenden Schicht (17') als Einheit von den anderen Schichten (17, 17') entfernbar ist.

10. Generatoreinrichtung nach einem der obigen Ansprüche,
**dadurch gekennzeichnet,**
**dass** die Strompfade (7 bis 9) derart miteinander verschaltet sind, dass sie im Normalbetrieb Drehstrom erzeugen.

11. Generatoreinrichtung nach Anspruch 10,
**dadurch gekennzeichnet,**
**dass** die Strompfade (7 bis 9) in Sternschaltung miteinander verschaltet sind.

12. Generatoreinrichtung nach einem der obigen Ansprüche,
**dadurch gekennzeichnet,**
**dass** die Überwachungseinrichtung (22) sich selbst auf ordnungsgemäßes Funktionieren überwacht und im Falle einer Fehlfunktion der Überwachungseinrichtung (22) das Abgeben einer Alarmmeldung (M) und/oder ein Stillsetzen des Rotors (4) auslöst.

13. Generatoreinrichtung nach einem der obigen Ansprüche,
**dadurch gekennzeichnet,**
**dass** die Überwachungseinrichtung (22) zum Stillsetzen des Rotors (4) das Betätigen einer elektrischen Bremse (14) bewirkt.

14. Generatoreinrichtung nach Anspruch 13,
**dadurch gekennzeichnet,**
**dass** die elektrische Bremse (14) als Wirbelstrombremse (14) ausgebildet ist.

15. Windkraftanlage, mit einem Windrad (1) und einer Generatoreinrichtung (2) nach einem der obigen Ansprüche, wobei das Windrad (1) mit dem Rotor (4) der Generatoreinrichtung (2) verbunden ist, so dass der Rotor (4) mittels des Windrads (1) antreibbar ist.

## Claims

1. Generator device for generating electrical energy,
- wherein the generator device comprises a rotor (4) rotatable about an axis (5) of rotation,
- wherein the generator device comprises a plurality of electrical current paths (7 to 9), in each of which a respective electrical voltage (U1 to U3) and a respective corresponding current (I1 to I3) are generated by rotation of the rotor,
- wherein the generated electrical voltages (U1 to U3) are tapped and supplied externally directly or indirectly as useful voltages (L1 to L3),
- wherein associated with the electrical current paths (7 to 9) is a common monitoring device (22) to which the generated voltage values (U1 to U3) and/or the generated current values (I1 to I3) (7 to 9) are fed,
- wherein the monitoring device (22) monitors the voltage values (U1 to U3), which are fed thereto, and/or the current values (I1 to I3), which are fed thereto, with respect to maintenance of predetermined relationships relative to one another and in the case of non-maintenance triggers a protective reaction, particularly stopping of the rotor (4),
- wherein the electrical current paths (7 to 9) are formed in such a manner that in a case of fault in the functioning of any one of the electrical current paths (7 to 9) an electrical voltage (U1 to U3) is further generated in at least one of the remaining electrical current paths (7 to 9), and
- wherein the monitoring device (22) is supplied with electrical energy by way of at least two of the electrical current paths (7 to 9).

2. Generator device according to claim 1, **characterised in that** the current paths (7 to 9) form a single layer (15).

3. Generator device according to claim 2, **characterised in that** the layer (15) extends in a plane (16) orthogonal to the axis (5) of rotation.

4. Generator device according to claim 2, **characterised in that** the layer (15) runs tangentially around the axis (5) of rotation.

5. Generator device according to claim 1, **characterised in that** the current paths (7 to 9) form several layers (17, 17').

6. Generator device according to claim 5, **characterised in that** each of the layers (17, 17') extends in a plane (18) orthogonal to the axis (5) of rotation and that the layers (17, 17') are arranged to be offset relative to one another as seen in the direction of the axis (5) of rotation.

7. Generator device according to claim 5, **characterised in that** the layers (17, 17') run tangentially around the axis (5) of rotation and that the layers (17, 17') are arranged to be spaced from one another as seen radially to the axis (5) of rotation.

8. Generator device according to claim 5, 6 or 7, **characterised in that** at least one of the two layers (17') arranged furthest away from one another is removable from the other layers (17, 17') without demounting other layers (17, 17').

9. Generator device according to any one of claims 5 to 8, **characterised in that** at least one of the two layers (17') arranged furthest away from one another is removable as a unit from the other layers (17') without demounting the layer (17') concerned.

10. Generator device according to any one of the preceding claims, **characterised in that** the current paths (7 to 9) are so connected together that in normal operation they generate a three-phase alternating current.

11. Generator device according to claim 10, **characterised in that** the current paths (7 to 9) are connected together in star connection.

12. Generator device according to any one of the preceding claims, **characterised in that** the monitoring device (22) is self-monitoring with respect to correct functioning and in the case of a fault in functioning of the monitoring device (22) triggers the issue of an alarm report (M) and/or stopping of the rotor (4).

13. Generator device according to any one of the preceding claims, **characterised in that** the monitoring device (22) causes actuation of an electrical brake (14) for stopping the rotor (4).

14. Generator device according to claim 13, **characterised in that** the electrical brake (14) is constructed as an eddy current brake (14).

15. Wind power plant comprising a wind wheel (1) and a generator device (2) according to any one of the preceding claims, wherein the wind wheel (1) is connected with the rotor (4) of the generator device (2) so that the rotor (4) is drivable by means of the wind wheel (1).

## Revendications

1. Dispositif de générateur destiné à générer de l'énergie électrique, dans lequel :
- le dispositif de générateur comporte un rotor (4) qui peut tourner autour d'un axe de rotation (5),
- le dispositif de générateur comporte une pluralité de trajets de courant électrique (7 à 9) dans lesquels une tension électrique (U1 à U3) et un courant correspondant (I1 à 13) sont générés à chaque fois par la rotation du rotor (4),
- les tensions électriques générées (U1 à U3) sont prélevées et sont directement ou indirectement délivrées à l'extérieur en tant que tensions utiles (L1 à L3),
- un système de contrôle commun (22) est associé aux trajets de courant électrique (7 à 9) et les valeurs de tension générées (U1 à U3) et/ou les valeurs de courant générées (I1 à 13) sont amenées (7 à 9) à ce système,
- le système de contrôle (22) contrôle si les valeurs de tension (U1 à U3) qu'il a reçues et/ou les valeurs de courant (I1 à 13) qu'il a reçues conservent entre elles des relations prédéfinies et, dans le cas contraire, le système de contrôle (22) déclenche une réaction de protection, en particulier un arrêt du rotor (4),
- les trajets de courant électrique (7 à 9) sont formés de manière telle que, en cas de dysfonctionnement de l'un quelconque des trajets de courant électrique (7 à 9), une tension électrique (U1 à U3) soit générée dans au moins un des trajets de courant électrique restants (7 à 9), et
- le système de contrôle (22) est alimenté en énergie électrique par le biais au moins de deux des trajets de courant électrique (7 à 9).

2. Dispositif de générateur selon la revendication 1, **caractérisé en ce que** les trajets de courant (7 à 9) forment une seule couche (15).

3. Dispositif de générateur selon la revendication 2, **caractérisé en ce que** la couche (15) est située dans un plan orthogonal (16) à l'axe de rotation (5).

4. Dispositif de générateur selon la revendication 2, **caractérisé en ce que** la couche (15) passe de manière tangentielle autour l'axe de rotation (5).

5. Dispositif de générateur selon la revendication 1, **caractérisé en ce que** les trajets de courant (7 à 9) forment plusieurs couches (17, 17').

6. Dispositif de générateur selon la revendication 5, **caractérisé en ce que** chacune des couches (17, 17') est située dans un plan orthogonal (18) à l'axe de rotation (5) et **en ce que** les couches (17, 17') sont disposées décalées les unes par rapport aux autres dans la direction de l'axe de rotation (5).

7. Dispositif de générateur selon la revendication 5, **caractérisé en ce que** les couches (17, 17') passent de manière tangentielle autour l'axe de rotation (5) et **en ce que** les couches (17, 17') sont disposées écartées les unes des autres de manière radiale à l'axe de rotation (5).

8. Dispositif de générateur selon la revendication 5, 6 ou 7, **caractérisé en ce qu'**au moins une des deux couches (17'), qui sont disposées les plus éloignées l'une de l'autre, peut être retirée des autres couches sans démonter d'autres couches (17, 17').

9. Dispositif de générateur selon l'une quelconque des revendications 5 à 8, **caractérisé en ce qu'**au moins une des deux couches (17'), qui sont disposées les plus éloignées l'une de l'autre, peut être retirée des autres couches (17, 17') en tant qu'unité sans démonter la couche concernée (17').

10. Dispositif de générateur selon l'une quelconque des revendications précédentes, **caractérisé en ce que** les trajets de courant (7 à 9) sont disposés les uns par rapport aux autres d'une manière telle qu'ils génèrent un courant triphasé en fonctionnement normal.

11. Dispositif de générateur selon la revendication 10, **caractérisé en ce que** les trajets de courant (7 à 9) sont disposés les uns par rapport aux autres de sorte qu'ils forment un circuit en étoile.

12. Dispositif de générateur selon l'une quelconque des revendications précédentes, **caractérisé en ce que** le système de contrôle (22) contrôle son propre bon fonctionnement et, en cas de dysfonctionnement, le système de contrôle (22) déclenche l'émission d'un message d'alarme (M) et/ou un arrêt du rotor (4).

13. Dispositif de générateur selon l'une quelconque des revendications précédentes, **caractérisé en ce que** le système de contrôle (22) actionne un frein électrique (14) pour arrêter le rotor (4).

14. Dispositif de générateur selon la revendication 13, **caractérisé en ce que** le frein électrique (14) est conçu sous la forme d'un frein à courants de Foucault.

15. Installation éolienne, équipée d'une roue éolienne (1) et d'un dispositif de générateur (2) selon l'une quelconque des revendications précédentes, la roue éolienne (1) étant reliée au dispositif de générateur (2) par le rotor (4) de sorte que le rotor (4) puisse être entraîné au moyen de la roue éolienne (1).
